# EUROPÄISCHE PATENTSCHRIFT

(11) **EP 0 447 841 B1**
(45) Veröffentlichungstag und Bekanntmachung des Hinweises auf die Patenterteilung: **13.09.1995**
(21) Anmeldenummer: 91102853.8
(22) Anmeldetag: 26.02.1991
(51) Int. Cl.: H04L 12/56

(54) **Verfahren zum Einrichten von virtuellen Verbindungen in nach einem asynchronen Transfermodus arbeitenden Vermittlungseinrichtungen**
Method for setting-up virtual circuits in an ATM (asynchronous transfer mode) switching system
Méthode pour établir des liaisons virtuelles dans un système de commutation travaillant selon le mode de transfert asynchrone (ATM)

(30) Priorität: 23.03.1990 DE 4009423
(43) Veröffentlichungstag der Anmeldung: 25.09.1991
(73) Patentinhaber: SIEMENS AKTIENGESELLSCHAFT, 80333 München (DE)
(72) Erfinder: Hofstetter, Helga, W-8000 München 40 (DE); Wallmeier, Eugen, Dr. rer. nat., W-8000 München 70 (DE)

(56) Entgegenhaltungen:
- EP-A- 0 343 611
- IEEE INFOCOM '89 Bd. II, 23. April 1989, OTTAWA , US Seiten 701 - 710; A. GERSHT ET AL.: 'A congestion control framework for ATM networks'
- IEEE INTERNATIONAL CONFERENCE ON COMMUNICATIONS ICC '89 Bd. 1, 11. Juni 1989, Boston, US, Seiten 415-422; P. Joos et al.: "A statistical bandwitdth allocation and usage monitoring algorithm for ATM networks"

## Beschreibung

Die Erfindung betrifft ein Verfahren zum Einrichten von virtuellen Verbindungen in nach einem asynchronen Transfermodus arbeitenden Vermittlungseinrichtungen nach dem Oberbegriff des Patentanspruches 1.

Verfahren dieser Art sind bereits bekannt durch die Zeitschrift INTERNATIONAL JOURNAL OF DIGITAL AND ANALOG CABLED SYSTEMS, VOL.1., Artikel von K.A. Lutz auf den Seiten 237-243 (1988) und durch das Konferenzpapier vom International Switching Symposium, 15.-20. März 1987, Proceedings, Phoenix, USA, 3(1987), Seiten 602-608. Mit Verfahren der bekannten Art werden virtuelle Verbindungen für Paketvermittlung eingerichtet. Hierfür werden Wege über Verbindungsleitungen sowie über ATM (ASYNCHRONOUS TRANSFER MODE)-Koppelfelder gesucht, ausgewählt und festgelegt. Innerhalb eines ATM-Koppelfeldes werden Wege über ATM-Koppelelemente und überATM-Zwischenleitungen festgelegt.

Bei der Suche, Auswahl und Festlegung von Wegen (Wegesuche) für neu einzurichtende virtuelle Verbindungen ist es wichtig, daß bereits durch virtuelle Verbindungen belegte Wege für weitere virtuelle Verbindungen nur in soweit in Anspruch genommen werden dürfen, wie auf diesen Wegen auch noch freie Übertragungskapazität verfügbar ist. Hierzu ist es bekannt, z.B. für jede Zwischenleitung in einem mehrstufigen ATM-Koppelfeld die jeweils momentan noch freie, also für das Einrichten neuer virtueller Verbindungen verfügbare Übertragungskapazität in einem ATM-Zwischenleitungs-Belegungsspeicher zu speichern. Diese noch freie, also für das Einrichten neuer virtueller Verbindungen jeweils verfügbare Übertragungskapazität kann z.B. gleich der Differenz zwischen der Gesamt-Übertragungskapazität einer Zwischenleitung und der von über diese eingerichteten virtuellen Verbindungen bereits in Anspruch genommenen Übertragungskapazität sein. Letztere kann z.B. die Summe aller Spitzenbitraten der betreffenden virtuellen Verbindungen sein.

Für die Suche, Auswahl und Festlegung von Wegen für neu einzurichtende virtuelle Verbindungen ist es nun bereits bekannt, daß pro in Frage kommender Zwischenleitung die jeweils noch freie, also für das Einrichten neuer virtueller Verbindungen verfügbare Übertragungskapazität größenmäßig verglichen wird mit der für die neue einzurichtende virtuelle Verbindung erforderlichen Übertragungskapazität, der z.B. die Spitzenbitrate dieser virtuellen Verbindung entsprechen möge.

Die Erfindung richtet sich darauf, bei Verfahren der eingangs angegebenen Art die sehr häufig abzuwickelnde Prozedur derWegesuche zu vereinfachen. Wird nun für jede Wegesuche ein größenmäßigervergleich der zuvor angesprochenen Art absolviert, so resultieren daraus besonders harte Anforderungen für entsprechende Verarbeitungseinrichtungen, und zwar deshalb, weil die Vorgänge des Einrichtens neuer virtueller Verbindungen einerseits zahlenmäßig viele pro Zeiteinheit sind also relativ häufig auftreten und andererseits nicht zu lange dauern sollen. Wartezeitprobleme beim Verbindungsaufbau sind störend und unerwünscht.

Es ist nun Aufgabe der Erfindung, für ein Verfahren der eingangs angegebenen Art geeignete Maßnahmen anzugeben, mit deren Hilfe die Suche, Auswahl und Festlegung von Wegen (Wegesuche) für neu einzurichtende virtuelle Verbindungen möglichst einfach abgewickelt werden können. Dabei sollen die Verarbeitungsvorgänge so gestaltet werden, daß alle Vorgänge, die unmittelbar vor jeder und für jede Einrichtung einer neuen virtuellen Verbindung abzuwickeln sind, möglichst vereinfacht werden.

Die Erfindung löst diese Aufgabe bei einem Verfahren gemäß Oberbegriff des Patentanspruches 1 durch die im kennzeichnenden Teil dieses Patentanspruches angegebenen Verfahrensmerkmale.

Durch die Erfindung werden die größenmäßigen Vergleiche zwischen verfügbaren Übertragungskapazitäten und erforderlichen Übertragungskapazitäten auf einfache Ein-Bit-Vergleiche reduziert. Dadurch vereinfacht sich die Wegesuche für neu einzurichtende virtuelle Verbindungen ganz erheblich, was von besonderer Bedeutung istfür virtuelle Verbindungen über ATM-Koppelfelder mit mehreren Koppelstufen und dementsprechend über verschiedene Gruppen von ATM-Zwischenleitungen. Diese Gruppen liegen an verschiedenen Stellen zwischen den aufeinanderfolgenden Koppelstufen im ATM-Koppelfeld. Hierfür sind nun Verbindungs-Bitratenklassen gebildet. Eine Wegesuche bedient sich - ausgehend jeweils von derfür eine neu einzurichtende virtuelle Verbindung maßgebenden Verbindungs-Bitratenklasse - der dieser Verbindungs-Bitratenklasse entsprechenden verschiedenen Speicherelemente und ermittelt aufgrund von einfachen Ein-Bit-Vergleichen die jeweils für die einzurichtende neue virtuelle Verbindung benutzbaren ATM-Zwischenleitungen.

Vorteilhafte Ausgestaltungen des erfindungsgemäßen Verfahrens ergeben sich aus den Patentansprüchen 2 bis 4.

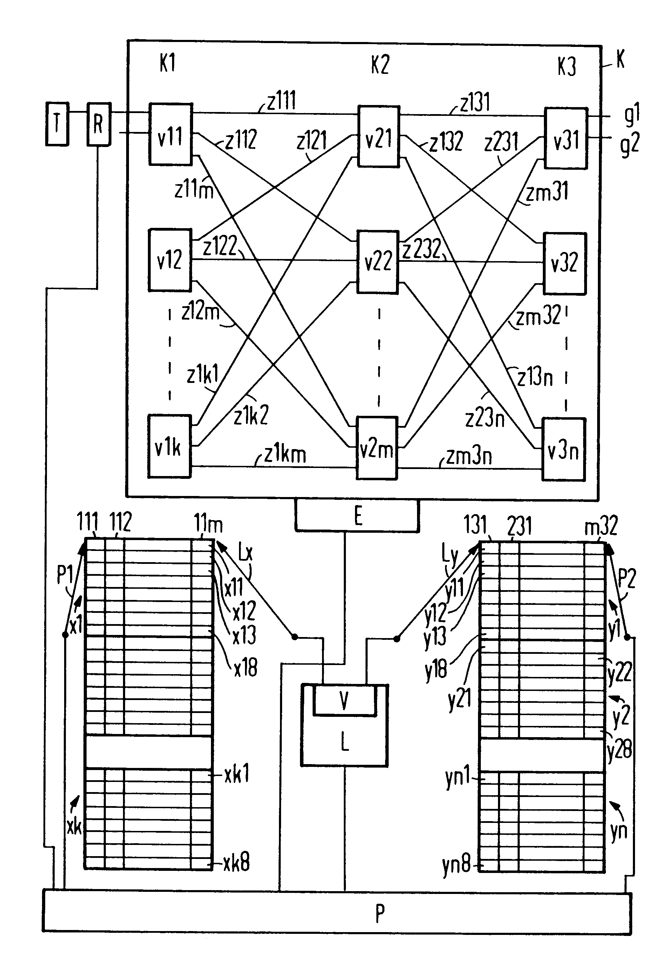

In der Zeichnung ist aisAusführungsbeispiei eine Vermittlungseinrichtung dargestellt, bei der die Erfindung angewandt ist. Von dieser Vermittlungseinrichtung sind dabei lediglich dem Verständnis der vorliegenden Erfindung dienende Bestandteile aufgeführt.

Ein ATM-Koppelfeld K (nachfolgend vereinfachend mit "Koppelfeld" bezeichnet) einer ATM-Vermittlungsstelle enthält in drei Koppelstufen K1 bis K3 ATM-Koppelelemente v11 bis v3n (nachfolgend nur mit "Koppelelement" bzw. "Koppelelemente" bezeichnet), die überZwischenleitungen z111 bis zm3n in der dargestellten Weise miteinander verbunden sind. ATM-Vermittlungsstellen in Kommunikationseinrichtungen mit asynchronem Transfermodus (ATM) sind bereits durch umfangreiche Fachliteratur bekannt, wozu auf einige exemplarische Beispiele hingewiesen sei: "International Zürich Seminar on Digital Communications", (März 1986) mit der Druckschrift "New Directions in Communications" (Abschnitt A3.1 bis A3.8, von J.B. Turner); deutsche Offenlegungsschrift 3 732 937; europäische Patentanmeldung 89102172.7; Zeitschrift "Nachrichtentechnik, Elektronik", Berlin, 39(1989)1, Seiten 3 und 4.

Bei der in der Zeichnung dargestellten Vermittlungseinrichtung handelt es sich also um eine Schaltungsanordnung für Kommunikationseinrichtungen mit asynchronem Transfermodus. Über das mehrstufige Koppelfeld K werden virtuelle Verbindungen eingerichtet. Hierzu führen ATM-Zwischenleitungen z111 bis zm3n von Koppelstufe zu Koppelstufe. Sie verbinden die Koppelvielfache v11 bis v3n der drei aufeinander folgenden Koppelstufen K1 bis K3 miteinander. Für virtuelle Verbindungen, die bekanntlich zur paketvermittelten Übertragung von Daten und Nachrichten dienen, werden verbindungsindividuelle Wege gesucht, ausgewählt und festgelegt. Diese virtuelle Verbindungen bestehen bekanntlich im Gegensatz zu PCM-Verbindungen und zu konventionell-galvanisch durchgeschalteten Verbindungen nicht in der Weise, daß ein Verbindungsweg (dies kann also ein galvanisch oder ein im Zeitmultiplex durchgeschalteter Weg sein) ausschließlich für eine Verbindung benutzt werden kann, sondern virtuelle Verbindungen sind von derart, daß durch sie Informationen in Form von Nachrichten-Paketen (Zellen) übermittelt werden, daß diese Pakete (Zellen) aufgrund eines Headers identifiziert sind und daß alle Pakete (Zellen) einer virtuellen Verbindung jeweils denselben, beim Einrichten ausgewählten Weg über Koppelfeld und Übertragungswege im Netz nehmen. Über virtuelle Verbindungen zu übermittelnde Nachrichtenpakete bzw. Datenpakete werden paketweise übermittelt, wobei über die betreffenden Verbindungswege, z.B. Übertragungskanäle von Übertragungssystemen und Zwischenleitungen, zeitlich zwischen den für die betreffende virtuelle Verbindung zu übermittelnden Datenpaketen weitere Datenpakete, und zwar anderer virtueller Verbindungen übermittelt werden. Bekanntlich werden jedoch virtuelle Verbindungen wegmäßig genau festgelegt. Hierzu dienen in den betreffenden Vermittlungsstellen entsprechende Wegesuch- und -auswahleinrichtungen.

Beim Einrichten virtueller Verbindungen über ATM-Vermittlungseinrichtungen geht es unter anderem darum, daß über entsprechende ATM-Verbindungswege, z.B. ATM-Zwischenleitungen, nur so viele virtuelle Verbindungen geführt werden, daß dies jeweils von der gegebenen Übertragungskapazität her betrachtet praktisch auch realisiert werden kann. Hierzu werden für virtuelle Verbindungen in einer ATM-Vermittlungseinrichtung verbindungsindividuelle Bitraten-Grenzwerte durch Speicherung entsprechender Daten festgelegt. Diese Bitraten-Grenzwerte können z.B. die Spitzenbitraten der betreffenden virtuellen Verbindungen sein. Wünscht ein Teilnehmer die Einrichtung einer neuen virtuellen Verbindung, so gibt er an, mit welcher Spitzenbitrate er zu senden (Nachrichten, Daten u. dgl.) beabsichtigt. Diese Spitzenbitrate darf von ihm beim Senden von Datenpaketen grundsätzlich nicht überschritten werden. In einer ersten ATM-Vermittlungsstelle, in der von dem betreffenden Teilnehmer ausgesendete Datenpakete eintreffen, wird laufend überwacht, ob der herangeführte ATM-Nachrichtenstrom hinsichtlich der Spitzenbitrate die von dem betreffenden Teilnehmer angekündigten Raten-Werte einhält oder übersteigt; bei einem Übersteigen werden in der Vermittlungsstelle entsprechende Gegenmaßnahmen eingeleitet. Dies kann darin bestehen, daß Teile der Nachrichtenpakete unterdrückt werden, d.h. überhaupt nicht oder verstümmelt übermittelt werden, und/oder daß eine entsprechende Signalisierung zu dem betreffenden Teilnehmer hin übertragen wird oder daß eine virtuelle Verbindung zwangsweise unterbrochen wird. Ferner kann eine entsprechende Gegenmaßnahme auch darin bestehen, daß entsprechende Pakete zunächst lediglich markiert und nur dann verworfen werden, wenn die Belastungssituation im Netz dies tatsächlich erfordert. Diese Gegenmaßnahme bedeutet also, daß es beim obigen Überschreitungs-Verbot auch Ausnahmen geben kann, die dann zugelassen werden können, wenn die Belastungssituation im Netz dies erlaubt.

Als Kriterium für die von einem Teilnehmer beim Senden von Datenpaketen angekündigte und während des Bestehens der betreffenden virtuellen Verbindung einzuhaltende Übertragungsleistung kann außer der Spitzenbitrate auch eine mittlere Bitrate (Mittelwert über längere Zeit, z.B. über ein Zeitintervall von einigen Minuten) dienen. Es können auch sowohl die Spitzenbitrate als auch die mittlere Bitrate zusammen als Kriterium dienen. In diesem Zusammenhang sei auf die europäische Patentanmeldung 90122430.3 hingewiesen.

Wie bereits erwähnt wurde, wird beim Einrichten einer virtuellen Verbindung durch einen Teilnehmer die erforderliche Spitzenbitrate sowie die mittlere Bitrate gemeldet. Diese Raten-Werte werden durch entsprechende Speicherung in der von dem Nachrichtenstrom dieses Teilnehmers zuerst erreichten ATM-Vermittlungseinrichtung festgelegt. Es werden also entsprechende Daten in dieser Vermittlungseinrichtung in Zuordnung zu der betreffenden virtuellen Verbindung gespeichert. Diese Spitzenbitrate und diese mittlere Bitrate dürfen beim Senden von paketvermittelten Nachrichten durch den betreffenden Teilnehmer nicht überschritten werden. Hierzu sind also für virtuelle Verbindungen in einer ATM-Vermittlungseinrichtung verbindungsindividuelle Bitraten-Grenzwerte durch Speicherung entsprechender Daten (Spitzenbitrate und/oder mittlere Bitrate) festgelegt.

Wie bereits angedeutet wurde, werden zum Einrichten neuer virtueller Verbindungen verbindungsindividuell Wege mittels einer Wegesuch- und -auswahleinrichtung gesucht, ausgewählt und festgelegt. Dabei wird die Zulässigkeit des Einrichtens neuervirtueller Verbindungen bezüglich einer jeden derfüreine solche Verbindung jeweils in Frage kommenden ATM-Zwischenleitungen anhand der für die betreffenden neuen virtuellen Verbindungen verbindungsindividuell festgelegten Bitraten-Grenzwerte geprüft. Diese Prüfung geschieht unter Berücksichtigung der auf den betreffenden ATM-Zwischenleitungen jeweils noch verfügbaren freien Bitraten-Übertragungskapazitäten. ATM-Zwischenleitungen kommen für neue virtuelle Verbindungen zunächst nach Maßgabe der Struktur des betreffenden Koppelnetzes grundsätzlich in Frage oder nicht. Für eine virtuelle Verbindung im Koppelnetz K, die über die Koppelvielfache v11 und v32 verlaufen soll, kommen lediglich die Zwischenleitungen z111 bis z11m und z132 bis zm32 in Frage. Die übrigen Zwischenleitungen kommen nicht in Betracht, weil sie bereits von der Koppelfeldstruktur her gesehen für die betreffende virtuelle Verbindung offensichtlich nicht geeignet sind. Von den für das Einrichten einer neuen virtuellen Verbindung in Frage kommenden Zwischenleitungen werden nun alle daraufhin überpruft, ob auf jeder einzelnen von ihnen noch die erforderliche Übertragungskapazität vorhanden ist. Es sei nun angenommen, daß diese Übertragungskapazität im angesprochenen Beispiels-Falle nicht mehr vorhanden ist auf den ATM-Zwischenleitungen z111 und z232. In diesem Falle kann die neue virtuelle Verbindung nicht eingerichtet werden über die ATM-Zwischenleitungen z111/z132/z112 /z232. Die gewünschte virtuelle Verbindung kann jedoch über die ATM-Zwischenleitungen z11m und zm32 eingerichtet werden. Insoweit ist also ersichtlich, daß eine Koinzidenzbedingung hinsichtlich der jeweils noch verfügbaren Übertragungskapazität erfüllt sein muß. Diese Koinzidenzbedingung ist für die Wegesuche von wesentlicher Bedeutung. Es ist dabei also zu prüfen, ob diese Koinzidenzbedingung jeweils erfüllt ist.

Das Ausführungsbeispiel einer ATM-Vermittlungseinrichtung enthält lediglich ein dreistufiges Koppelfeld. Entsprechendes gilt jedoch auf für vierstufige und darüber hinausgehende mehrstufige Koppelfelder.

In der Zeichnung ist nun unter anderem ein ATM-Zwischenleitungs-Belegungsspeicher dargestellt, der aus den Speicherteilen x1 bis xk und y bis yn besteht. Mit Hilfe dieses Belegungsspeichers werden für die ATM-Zwischenleitungen des Koppelfeldes K die auf ihnen zwischenleitungsindividuell jeweils noch verfügbaren freien Bitraten-Übertragungskapazitäten gespeichert. Diese gespeicherten Kapazitäten werden für die bereits weiter oben beschriebene Prüfung herangezogen, bei der die Zulässigkeit des Einrichtens neuer virtueller Verbindungen bezüglich einer jeden derfürsie in Frage kommenden ATM-Zwischenleitungen anhand der jeweils für die betreffenden neuen virtuellen Verbindungen festgelegten Bitraten-Grenzwerte und anhand der auf den betreffenden ATM-Zwischenleitungen jeweils noch verfügbaren freien Bitraten-Übertragungskapazität geprüft wird.

Es ist nun vorgesehen, daß die virtuellen Verbindungen mit einer unbegrenzten Anzahl von verschiedenen möglichen Bitraten-Grenzwerten in demgegenüber wesentlich wenigere, sich auf Größenbereiche der Bitraten-Grenzwerte beziehende Verbindungs-Bitratenklassen zusammengefaßt sind. Die virtuellen Verbindungen werden ja von Teilnehmern mit Hilfe von von ihnen abgegebenen Wahlinformationen zunächst angefordert. Die von ihnen gewünschten Bitraten-Grenzwerte sind dabei teilnehmerindividuell. Hieraus folgt, daß die Anzahl von verschiedenen möglichen Bitraten-Grenzwerten naturgemäß zunächst unbegrenzt ist. Die Teilnehmer können - soweit ihr jeweiliges Endgerät dies technisch zuläßt - frei wählen, mit welcher mittleren Bitrate und mit welcher Spitzenbitrate sie zu senden beabsichtigen.

Treffen nun bei der Anforderung einer neuen virtuellen Verbindung durch die Teilnehmersignalisierung (Wahl) die vom Teilnehmer frei gewählten bzw. durch das jeweils vorhandene Endgerät bestimmten Bitraten-Grenzwerte ein, so werden diese zunächst Größenbereichen der Bitraten-Grenzwerte zugeordnet. Dies betrifft sowohl die mittleren Bitrate als auch die Spitzenbitrate. Dabei ist die Relation zwischen mittlerer Bitrate und Spitzenbitrate auch nicht festgelegt. Es können Verbindungswünsche angegeben werden, bei denen der betreffende Teilnehmer sehr stetig senden möchte. In diesem Falle ist die von ihm angegebene Spitzenbitrate gar nicht oder nur wenig höher als die von ihm angegebene mittlere Bitrate. Im entgegengesetzten Fall kann es auch Verbindungswünsche geben, bei denen ein Teilnehmer während des Bestehens einer von ihm gewünschten virtuellen Verbindung nur sehr sporadisch zu senden beabsichtigt. In diesem Falle gibt er nur eine relativ niedrige mittlere Bitrate an, wohingegen die von ihm in Anspruch genommene Spitzenbitrate ganz wesentlich höher sein kann. Die von den Teilnehmern angegebenen Bitraten-Grenzwerte werden nun also festgelegten Größenbereichen der Bitratenwerte zugeordnet. Diese Größenbereiche betreffen sowohl die Grenzwerte der mittleren Bitrate als auch die Grenzwerte der Spitzenbitrate.

Es sind nun Verbindungs-Bitratenklassen gebildet, die durch unterschiedliche Größenbereiche der Bitraten-Grenzwerte gekennzeichnet sind. Eine Verbindungs-Bitratenklasse ist durch einen Größenbereich hinsichtlich der mittleren Bitrate und durch einen anderen Größenbereich hinsichtlich der Spitzenbitrate gekennzeichnet. Die verschiedenen Verbindungs-Bitratenklassen können teilweise durch gleiche Größenbereiche hinsichtlich der mittleren Bitrate und durch verschiedene Größenbereich hinsichtlich der Spitzenbitrate gekennzeichnet sein - und umgekehrt.

Die in der zuvor beschriebenen Weise sich voneinander durch die Größenbereiche der Bitraten-Grenzwerte unterscheidenden Verbindungs-Bitratenklassen sind zweckmäßig numeriert. Durch die Numerierung einer Verbindungs-Bitratenkiasse sind also der jeweilige Größenbereich des Bitraten-Grenzwertes hinsichtlich mittlerer Bitrate sowie der Größenbereich des Bitraten-Grenzwertes hinsichtlich der Spitzenbitrate festgelegt.

Wünscht ein Teilnehmer an der Teilnehmerstelle T eine virtuelle Verbindung herzustellen, so gibt er außer den üblichen Wahlinformationen unter anderem die Bitraten-Grenzwerte hinsichtlich mittlerer Bitrate und hinsichtlich Spitzenbitrate zu der betreffenden Vermittlungsstelle hin ab. Diese Grenzwerte können z.B. in einer Teilnehmeranschlußschaltung R aufgenommen und von hier an einen zentralen Prozessor P weitergeleitet werden, der die Einrichtung der virtuellen Verbindungen verbindingsindividuell steuert und hierzu pro gewünschter virtueller Verbindung unter anderem die beiden genannten Bit raten-Grenzwerte aufnimmt und zunächst speichert.

In dergleichen Weise sind auch die auf den ATM-Zwischenleitungen jeweils noch verfügbaren freien Übertragungskapazitäten in Übertragungs-Bitratenklassen mit entsprechenden Übertragungsbitraten-Grenzwerten zusammengefaßt. Die ATM-Zwischenleitungen haben ja jeweils eine bestimmte maximale Übertragungskapazität. Durch bereits über eine ATM-Zwischenleitung eingerichtete virtuelle Verbindungen ist ein Teil der Übertragungskapazität der betreffenden ATM-Zwischenleitung bereits beansprucht. Bei Einrichtung einer neuen virtuellen Verbindung kann dann nur noch die restliche freie Übertragungskapazität in Anspruch genommen werden. Nur diese ist also noch für neu einzurichtende virtuelle Verbindung verfügbar. Dies gilt ganz allgemein, also unter dem Aspekt einer Berücksichtigung von Spitzenbitraten und/odervon mittleren Bitraten. - Für die Erfassung der pro ATM-Zwischenleitung freien Übertragungskapazitäten in Übertragungs-Bitratenklassen mit entsprechenden Übertragungs-Bitraten-Grenzwerten dient der ATM-Zwischenleitungs-Belegungsspeicher, der nachfolgend vereinfacht als "Wegesuchspeicher" bezeichnet wird. Er besteht aus den Speicherteilen x1 bis xk und y1 bis yn. Die ATM-Zwischenleitungen im Koppelfeld K bilden ATM-Zwischenleitungsgruppen. Eine ATM-Zwischenleitungsgruppe geht immer jeweils von einem Koppelelement aus bzw. führt zu einem solchen hin. Eine solche ATM-Zwischenleitungsgruppe besteht z.B. aus den ATM-Zwischenleitungen z111 bis z11m. Sie geht von dem Koppelelement v11 aus. Eine andere ATM-Zwischenleitungsgruppe besteht z.B. aus den ATM-Zwischenleitungen z132 bis zm32. Sie führt zu dem ATM-Koppelelement v32 hin. Entsprechendes gilt für alle weiteren ATM-Zwischenleitungen im Koppelfeld K.

Ausgangsseitig sind an die Koppelelemente v31 bis v3n ATM-Verbindungsleitungen oder entsprechende Teilnehmerleitungen in an sich bekannter Weise angeschlossen. Diese führen zu anderen ATM-Vermittlungsstellen. Dargestellt sind lediglich zwei solcherATM-Verbindungsleitungen g1 und g2.

In dem Wegesuchspeicher ist nun pro ATM-Zwischenleitungsgruppe, z.B. z111 bis z11m, eine Schar von Speicherelementezeilen, z.B. x11 bis x18, vorgesehen. Jeweils eine Speicherelementezeile, z.B. x11, ist einer der Übertragungs-Bitratenklassen zugeordnet. Die Größe dieser Schar richtet sich also nicht nach der Anzahl von ATM-Zwischenleitungen in einer ATM-Zwischenleitungsgruppe, sondern nach der Anzahl von Übertragungs-Bitratenklassen, die überhaupt vorgesehen sind.

Wie aus der Zeichnung zu erkennen ist, sind die Speicherelementezeilen x11 bis xk8 und y11 bis yn8 in Spalten 111 bis 11 m und 131 bis m31 unterteilt. Jeweils ein Speicherelement (Speicherplatz) ist Bestandteil einer Speicherelementezeile und gehört zugleich jeweils auch zu einer bestimmten Spalte, z.B. 111.

Innerhalb jeder Speicherelementezeile, z.B. x11, sind die einzelnen Speicherelemente (je ein Speicherelement pro Spalte) den an das jeweilige ATM-Koppelement, z.B. v11, angeschlossenen ATM-Zwischenleitungen, z.B. z111 bis z11m, einzeln zugeordnet. Diese Speicherelemente sind binär signifizierbar, d.h. sie können den logischen Wert Null und den logischen Wert Eins annehmen. Dadurch zeigen sie die Verfügbarkeit von auf diesen ATM-Zwischenleitungen vorhandenen Übertragungskapazitäten hinsichtlich der jeweiligen Übertragungs-Bitratenklasse an. Dies möge dadurch signifiziert sein, daß das jeweilige Speicherelement den logischen Wert Eins trägt. Dadurch zeigt es für die zugeordnete ATM-Zwischenleitung, z.B. z111, der ja z. B. die Spalte 111 zugeordnet ist, an, daß auf dieser ATM-Zwischenleitung noch Übertragungskapazität für die jeweilige Übertragungs-Bitratenklasse verfügbar ist.

Wie bereits ausgeführt, entspricht jeweils eine Speicherelementezeile einer Übertragungs-Bitratenklasse. Diese Bitratenklasse kann - wie bereits ebenfalls weiter oben ausgeführt worden ist - gekennzeichnet sein durch zwei Bitraten-Grenzwerte (von obigen Größenbereichen), von denen einer die mittlere Bit- rate und einer die Spitzenbitrate betrifft. Durch die Signifizierung ist also für eine bestimmte ATM-Zwischenleitung (dieser entspricht eine Spalte) angegeben, ob Übertragungskapazität bei dieser ATM-Zwischenleitung noch verfügbar ist im Hinblick auf die jeweilige Übertragungs-Bitratenklasse, die durch bestimmte Größenbereiche der Bitraten-Grenzwerte gekennzeichnet ist, wobei diese Bitraten-Grenzwerte sich (wie bereits angegeben) einerseits auf die mittlere Bitrate und andererseits auf die Spitzenbitrate beziehen.

Wird nun von einem Teilnehmer über seine Teilnehmerstelle T der Auftrag zum Einrichten einer neuen virtuellen Verbindung gegeben, so enthält dieser Auftrag außer der Zielinformation (z.B. Teilnehmerrufnummer) auch Angaben über die gewünschte mittlere Bitrate und überdie Spitzenbitrate. Aufgrund dieser Angaben wird die gewünschte virtuelle Verbindung nach Maßgabe der Bitraten-Grenzwerte den sie betreffenden Größenbereichen (betreffend mittlere Bitrate und Spitzenbitrate) zugeordnet; die gewünschte Verbindung wird demgemäß einer bestimmten Verbindungs-Bitratenklasse zugeordnet. Hierzu werden die genannten Angaben von der Teilnehmeranschlußschaltung R einem Prozessor P zugeleitet, der unter anderem diese Zuordnungen vornimmt. Dieser Prozessor erhält außerdem auch die Zielinformation (Wahlinformationen), aufgrund der er die Einrichtung der gewünschten virtuellen Verbindung über eine Schnittstelleneinrichtung E in dem ATM-Koppelfeld in die Wege leitet. Dies geschieht in an sich bekannter Weise. Jedoch bei der Wegesuche selbst geht der Prozessor in erfindungsgemäßer Weise vor.

Es sei nun angenommen, daß die Ziel information (z.B. Fernverkehrsziffer plus Ortskennzahl plus Teilnehmerrufnummer) dazu führt, daß eine virtuelle Verbindung über das Koppelelement v32 einzurichten ist. Dabei sei davon ausgegangen, daß der wählende Teilnehmer der Teilnehmer an der Teilnehmerstation T sei. Die gewünschte virtuelle Verbindung ist also unter anderem über das Koppelelement v11 einzurichten. Nun geht es darum, einen geeigneten Weg über das Koppelfeld zu suchen. Hierfürkommen die Zwischenleitungsgruppen z111 bis z11m und z132 bis zm32 in Frage. Eine Information hierüber gibt der Prozessor an die Wegesucheinrichtung L ab, die die Aufgabe hat, einen geeigneten freien Weg zu suchen, auszuwählen und festzulegen. Insoweit steht nun durch die Informationen, die die Wegesucheinrichtung L erhalten hat, bereits fest, daß ein entsprechend freier Weg in der Zwischenleitungsgruppe z111 bis z11m einerseits und z132 bis zm32 zu suchen ist. Diesen beiden Zwischenleitungsgruppen entsprechen die beiden Speicherteile x1 und y2.

Die Wegesucheinrichtung L steuert mit Hilfe ihrer Leseeinrichtungen Lx und Ly die Speicherteile x1 und y1 an. Der Prozessor teilt der Leseeinrichtung L außerdem die Bitratenklasse mit, die die für die gewünschte virtuelle verbindung maßgebende ist. Anhand der Information über die Bitratenklasse steuert die Wegesucheinrichtung L nun mit Hilfe ihrer Leseeinrichtungen Lx und Ly innerhalb der Speicherteile x1 und y2 diejenigen Speicherelementezeilen innerhalb dieser Speicherteile an, die der Bitratenklasse zugeordnet sind. Die Wegesucheinrichtung L sucht nun innerhalb der beiden Speicherelementezeilen unter denjenigen ATM-Zwischenleitungen eine frei aus, die hinsichtlich der Aufeinanderfolge der Spalten 111 bis 11m und 131 bis m32 koinzident durch eine logische 1 signifiziert sind. Selbstverständlich sind die beiden genannten logischen Werte auch austauschbar.

Die beiden Leseeinrichtungen Lx und Ly lesen also in den betreffenden beiden Speicherzeilen von links nach rechts Spalte für Spalte fortschreitend die Inhalte der einzelnen Speicherelemente, und zwar gleichzeitig Speicherelement für Speicherelement in jeder der beiden Speicherelementezeilen. Bei einer solchen Absuchreihenfolge spricht man von einer mit einer festen Nullstellung. Ebenso kann aber auch eine solche mit fortschreitender oder auch zufallsmä- ßig oder anderweitig wechselnder Nullstellung zum Einsatz kommen. - Sobald die Wegesucheinrichtung L über ihre beiden Leseeinrichtungen Lx und Ly gleichzeitig je eine logische Eins empfängt, ist hieran für sie erkennbar, daß bei den betreffenden beiden ATM-Zwischenleitungen jeweils noch Übertragungskapazität für die gewünschte Bitratenklasse frei und somit für die Einrichtung einer neuen virtuellen Verbindung verfügbar ist.

Wie ausgeführt wurde, gewährleistet die betreffende Bitratenklasse, daß über die betreffende virtuelle Verbindung eine mittlere Bitrate und eine Spitzenbitrate übermittelt werden können, die den Größenbereichen der Bitraten-Grenzwerte entspricht. Es wird also anhand des für die jeweils neu einzurichtende virtuelle Verbindung maßgebenden Bitraten-Grenzwertes bzw. der maßgebenden Bitraten-Grenzwerte (zum Ausdruck kommend durch die betreffende Bitratenklasse) eine Speicherelementezeile aufgesucht, deren zugeordnete Übertragungs-Bitratenklasse diesen beiden Bitraten-Grenzwerten und somit der gewünschten Bitratenklasse hinsichtlich der für die neue virtuelle Verbindung erforderlichen Übertragungskapazität entspricht.

Innerhalb der betreffenden Speicherelementezeile wird eine derjenigen Zwischenleitungen, deren Speicherelemente signifiziert sind, ausgewählt. Dies geschieht nach einem für die Wegesuche vorgesehenen, zuvor erwähnten Auswahlmodus. Dieser kann vorsehen, daß eine Auswahl mitfestem Nullpunkt und gleichbleibender Absuchreihenfolge zum Tragen kommt. Es können aber auch andere Auswahlmodi zum Tragen kommen, z.B. mit nichtfester Nullstellung und/oder mit nichtfester Absuchreihenfolge.

Erfindungsgemäß erfolgt in der obenbeschriebenen Weise in den verschiedenen koppelstufen-ungleichen ATM-Zwischenleitungsgruppen entsprechend den in Frage kommenden Speicherelementezeilen eine Auswahl von ATM-Zwischenleitungen in Abhängigkeit davon, daß innerhalb dieser Speicherelementezeilen für einander entsprechende Speicherelemente eine Koinzidenz hinsichtlich ihrer Signifizierung besteht. Einander entsprechende Speicherelemente sind dabei solche, die in gleichnamigen Spalten liegen, z.B. 112 und 231.

Die hier gegebene Beschreibung nimmt auf Koppelfelder mit gestreckter Gruppierung Bezug. Bei Anwendung der Erfindung in einer ein Koppelfeld mit Umkehrgruppierung aufweisenden Vermittlungseinrichtung gilt Entsprechendes sinngemäß.

Es wurde bereits darauf hingewiesen, daß das Koppelfeld auch mit mehr als drei Koppelstufen aufgebaut sein kann. In entsprechender Weise ist dann auch die Wegesuche zu gestalten, wobei in der erfindungsgemäßen Weise eine Koinzidenzbildung nicht nur zwischen zwei signifizierten Speicherlementen sondern zwischen entsprechend mehr Speicherlementen vorzusehen ist. Ferner können die Verbindungs-Bitratenklassen sowie die Übertragungs-Bitratenklassen statt nach Maßgabe zweier Grenzwerte (mittlere Bitrate und Spitzenbitrate) auch nach Maßgabe eines oder mehrerer Grenzwerte festgelegt sein.

Im vorliegenden Falle sind pro Speicherteil (z. B. x1, y1) acht verschiedene Speicherelementezeilen vorgesehen. Diesen entsprechen acht Verbindungs-Bitratenklassen und acht Übertragungs-Bitratenklassen. Diese können gekennzeichnet sein durch zwei verschiedene Größenbereiche hinsichtlich der Spitzenbitraten und vier verschiedene Größenbereiche hinsichtlich der mittleren Bitraten.

Die Funktionsweise des Prozessors P umfaßt u.a. auch das Einschreiben der Signifizierungen in die einzelnen Speicherelemente der Speicherelementezeilen für jede der ATM-Zwischenleitungen. Hierzu wird ausgehend vom Belastungs-Ist-Zustand aufeinerATM-Zwischenieitung die jeweils noch freie, für neue virtuelle Verbindungen verfügbare Übertragungskapazität ermittelt. Dann wird in denjenigen Speicherelementezeilen, die Übertragungs-Bitratenklassen mit der ermittelten Übertragungskapazität sowie kleinerer Übertragungskapazität entsprechen und die dementsprechenden Übertragungsbitraten-Grenzwerten zugeordnet sind, das Speicherelement für die jeweilige ATM-Zwischenleitung signifiziert. Wird also z.B. die noch freie Übertragungskapazität auf der ATM-Zwischenleitung z112 ermittelt, so wird im Zusammenhang hiermit die Schreibeinrichtung P1 zunächst auf den Speicherteil (x1) eingestellt, dem die ATM-Zwischenleitung z112 zugeordnet ist. Ist die noch freie, also für neue virtuelle Verbindungen verfügbare Übertragungskapazität bezüglich der ATM-Zwischenleitung z112 ermittelt worden, so schreibt die Schreibeinrichtung P1 in die dieser ATM-Zwischenleitung z112 entsprechende Spalte 112 teils logische Nullen und teils logische Einsen ein. Hierbei werden in die Speicherelemente aller derjenigen Speicherelementezeilen logische Einsen eingeschrieben, denen Übertragungs-Bitratenklassen zugeordnet sind, für die noch ausreichend Übertragungskapazität auf der ATM-Zwischenleitung z112 vorhanden und verfügbar ist. Dies wird anschließend noch etwas genauer erläutert.

Der Prozessor bildet und speichert in einem weiteren Speicherbereich für jede ATM-Zwischenleitung bezüglich aller über diese eingerichteten Verbindungen einerseits die Summe der mittleren Bitraten dieser Verbindungen und andererseits eine Produktesumme, in der die einzelnen Produkte jeweils aus der mittleren Bitrate und der Differenz zwischen der Spitzenbitrate und der mittleren Bitrate einer der virtuellen Verbindungen gebildet sind, d.h. die Produkte sind verbindungsindividuell gebildet. Dieser besondere Speicherbereich kann z.B. Bestandteil einer Spalte, z.B. 112, in einem Speicherteil, z.B. x1, sein. Dieser besondere Speicherbereich wird also der ATM-Zwischenleitung z112 zugeordnet sein.

Bei Einrichtung einer neuen virtuellen Verbindung sowie beim Aufheben einer eingerichten virtuellen Verbindung bildet der Prozessor P die Summe sowie die Produktesumme neu. Dies kann in der Weise geschehen, daß von der die Belegungssituation jeweils verändernden virtuellen Verbindung die mittlere Bitrate und das dieser virtuellen Verbindung entsprechende Produkt dazu verwendet werden, die genannte Summe sowie die genannte Produktesumme zu vergrößern bzw. zu verkleinern, d.h. auf jeweils aktuellen Stand zu bringen.

Wie bereits ausgeführt wurde, ermittelt der zentrale Prozessor für jede ATM-Zwischenleitung unter Zugrundelegung der mittleren Bitraten und der Spitzenbitraten der bereits über diese Zwischenleitung eingerichteten virtuellen Verbindungen ausgehend von mittlerer Bitrate und Spitzenbitrate einer jeden der Übertragungs-Bitratenklassen, ob jeweils wenigstens eine neue virtuelle Verbindung der der jeweiligen Übertragungs-Bitratenklasse entsprechenden Verbindungs-Bitratenklasse eingerichtet werden darf. Diese Rechenoperationen werden vom Prozessor zeitlich nach den Wegesuchvorgängen durchgeführt. Dadurch sind die Wegesuchvorgänge sowohl hinsichtlich ihrer zeitlichen Dringlichkeit sehr entschärft als auch vereinfacht, indem sie reduziert sind auf einfache Ein-Bit-Vergleichsvorgänge. Insbesondere wirkt sich aber diesbezüglich sehr positiv aus, daß die Berechnungsvorgänge beschränkt werden können auf diejenigen ATM-Zwischenleitungen, die von dem Einrichten bzw. Auslösen einer virtuellen Verbindung gerade unmittelbar betroffen sind.

Der Prozessor rechnet also für jede ATM-Zwischenleitung, bei der sich in der Belegungssituation etwas geändert hat (d.h. nicht nur beim Einrichten einer neuen virtuellen Verbindung, sondern in der sinngemäß entsprechenden Weise auch bei jeder Auslösung einer solchen) nacheinander die Möglichkeiten für virtuelle Verbindungen in den verschiedenen Bitratenklassen durch. Hierbei legt er die mittlere Bitrate und die Spitzenbitrate jeder der bereits über diese ATM-Zwischenleitung eingerichteten virtuellen Verbindungen zugrunde. Zweckmäßig verwendet er hierzu die bereits gebildete Summe und Produktesumme. Ausgehend von mittlerer Bitrate und Spitzenrate einer jeden der möglichen Übertragungs-Bitratenklassen errechnet der Prozessor, ob jeweils wenigstens eine neue virtuelle Verbindung der der jeweiligen Übertragungs-Bitratenklasse entsprechenden Bitratenklasse hinsichtlich der noch verfügbaren Übertragungskapazitäteingerichtetwerden darf. Er zieht hierzu sowohl die genannte Produktesumme als auch die genannte Summe der mittleren Bitraten für die eingerichteten virtuellen Verbindungen heran und addiert zu der Produktesumme und zu der Summe der mittleren Bitraten auch noch das entsprechende Produkt und die entsprechende mittlere Bitrate für eine virtuelle Verbindung einer der verschiedenen Bitratenklassen. Der Prozessor bildet also eine Produktesumme sowie eine Summe der mittleren Bitraten für die eingerichten virtuellen Verbindungen sowie für eine virtuelle Verbindung einer der verschiedenen Bitratenklassen. Dies wickelt der Prozessor pro Bitratenklasse ab. Er bildet dann aus der so gewonnenen Produktesumme einen Quadratwurzelwert und multipliziert ihn mit einem Vergrößerungsfaktor. Dann addiert er hierzu die Summe der mittleren Bitraten und bildet so einen Vergleichswert, der also das Ergebnis dieser Addition ist. Wenn nun dieser Vergleichswert die maximale Übertragungsbitrate der in Frage kommenden ATM-Zwischenleitung nicht überschreitet, wird in der der jeweiligen Übertragungs-Bitratenklasse entsprechenden Speicherzeile diese ATM-Zwischenleitung signifiziert, d.h. es wird eine logische Eins eingeschrieben. Im anderen Falle wird eine logische Null eingeschrieben.

Es sei auch noch auf den Vergleicher V hingewiesen. Dieser dient zur Durchführung der bereits beschriebenen Koinzidenzprüfung. Mit seiner Hilfe wird also festgestellt, daß einander entsprechende Zwischenleitungen koinzident signifiziert sind.

Es wurde bereits auf die europäische Patentanmeldung 90122430.3 hingewiesen. Hierin ist unter anderem beschrieben, daß der erläuterte Vergleichsvorgang auch abgewandelt werden kann. Dies gilt selbstverständlich auch bei Anwendung der Inhalte dieser älteren Anmeldung im Falle der vorliegenden Erfindung. So ist es auch möglich, daß der Prozessor den genannten Vergleichswert noch etwa präzisiert. Demgemäß ist vorgesehen, daß er aus den Spitzenbitraten der über die jeweilige ATM-Zwischenleitung bereits eingerichteten virtuellen Verbindungen die größte Spitzenbitrate auswählt und deren Betrag auch noch dem Vergleichswert hinzufügt und erst dann den beschriebenen Vergleich durchführt.

Weiter oben wurde ein Vergrößerungsfaktor erwähnt, der anschließend noch etwas genauer erläutert werden soll. Mit einer hochgradigen Wahrscheinlichkeit tritt der Fall nicht ein, daß auf eine ATM-Leitung im praktischen Betrieb Bitraten in solchem Umfang auftreten, daß die Übertragungskapazität einer ATM-Leitung überschritten wird. Es sei angenommen, daß diese Wahrscheinlichkeit mit 10-⁹ gefordert wird. Im wesentlichen resultiert aus diesem Exponenten (- 9) die Größe des Vergrößerungsfaktors. Dieser beträgt bei einer Wahrscheinlichkeit (mit der also ein Verlust von Zellen eintritt) von 10-⁹ bis 10-¹⁰ etwa 8 bis 9. Randbedingungen hierbei sind, daß a) eine ATM-Leitung mit einer Brutto-Transportkapazität ("Brutto" bedeutet, einschließlich Header der ATM-Zellen) von etwa 150 Mbit/s betrieben wird, b) die Spitzenbitraten der virtuellen Verbindungen, die über diese ATM-Leitung geführt werden, 2 Mbit/s nicht übersteigen und c) das Verhältnis von mittlerer Bitrate zu Spitzenbitrate bei jeder der Verbindungen zwischen 0,1 und 0,9 liegt.

Abschließend sei noch darauf hingewiesen, daß die zuvor beschriebene Vermittlungseinrichtung auch derart modifiziert sein kann, daß einerseits anstelle eines ATM-Zwischenleitungs-Belegungsspeichers (Wegesuchspeichers) fürdie ATM-Zwischenleitungsgruppen auch eine der Anzahl der ATM-Zwischenleitungsgruppen entsprechende Anzahl von ATM-Zwischenleitungs-Belegungsspeichern vorgesehen sein kann, welche bei der oben beschriebenen Wegesuche parallel ansteuerbar sind, und andererseits die zuvor beschriebenen Funktionen der Wegesucheinrichtung L auch durch den Prozessor P ausgeführt sein können.

## Patentansprüche

1. Verfahren zum Einrichten von virtuellen Verbindungen in nach einem asynchronen Transfermodus arbeitenden, mehrstufige ATM-Koppelfelder umfassenden ATM-Vermittlungseinrichtungen,
- in welchen ATM-Zwischenleitungen von Koppelstufe zu Koppelstufe führen und ATM-Koppelelemente aufeinanderfolgender Koppelstufen miteinander verbinden,
- in welchen für die einzelnen virtuellen Verbindungen verbindungsindividuelle Bitraten-Grenzwerte (z. B. Spitzenbitraten) durch Speichern entsprechender Daten festgelegt sind,
- in welchen zum Einrichten neuer virtueller Verbindungen verbindungsindividuell Wege mit Hilfe wenigstens eines ATM-Zwischenleitungs-Belegungsspeichers ausgewählt werden, worin für die ATM-Zwischenleitungen individuell die noch verfügbaren freien Bitraten-Übertragungskapazitäten gespeichert sind,
- und in welchen die Zulässigkeit des Einrichtens neuer virtueller Verbindungen bezüglich einer jeden der für diese Verbindungen in Frage kommenden ATM-Zwischenleitungen anhand derfürdie neuen virtuellen Verbindungen festgelegten Bitraten-Grenzwerte und anhand der auf den betreffenden ATM-Zwischenleitungen jeweils noch verfügbaren freien Bitraten-Übertragungskapazität geprüft wird,
dadurch gekennzeichnet,
daß einerseits die virtuellen Verbindungen auf Größenbereiche der Bitraten-Grenzwerte sich beziehenden Verbindungs-Bitratenklassen und andererseits die auf den ATM-Zwischenleitungen jeweils noch verfügbaren freien Übertragungskapazitäten Übertragungs-Bitratenklassen mit entsprechenden Übertragungsbitraten-Grenzwerten zugeordnet werden,
daß die von einem der ATM-Koppelelemente jeweils ausgehenden und/oder zu einem solchen ATM-Koppelelement hinführenden ATM-Zwischenleitungen zu einer ATM-Zwischenleitungsgruppe zusammengefaßt werden,
daß in dem ATM-Zwischenleitungs-Belegungsspeicher bzw. den ATM-Zwischenleitungs-Belegungsspeichern für jede der ATM-Zwischenleitungsgruppen eine Schar von Speicherelementen mit jeweils einer Mehrzahl von Speicherplätzen reserviert wird, wobei jedes der Speicherelemente einer bestimmten Verbindungs-Bitratenklasse bzw. Übertragungs-Bitratenklasse und innerhalb des jeweiligen Speicherelementes jeder der Speicherplätze einer der an das jeweilige ATM-Koppelelement angeschlossenen ATM-Zwischenleitungen zugeordnet wird,
daß die einzelnen Speicherplätze eines Speicherelementes jeweils bei Vorhandensein einer freien Übertragungskapazität auf der zugeordneten ATM-Zwischenleitung für die dem jeweiligen Speicherelement zugeordneten Übertragungs-Bitratenklasse binär gekennzeichnet werden, daß für das Einrichten einer neuen virtuellen Verbindung über eine der Anzahl der Koppelstufen entsprechende Anzahl von ATM-Zwischenleitungen zu jeder der in Frage kommenden ATM-Zwischenleitungsgruppen ein der der neuen virtuellen Verbindung zugeordneten Verbindungs-Bitratenklasse entsprechendes Speicherelement angesteuert wird
und daß durch einen innerhalb der gerade angesteuerten Speicherelemente hinsichtlich der Reihenfolge in gleicherweise festgelegten Abfragevorgang der einzelnen Speicherplätze diejenigen ATM-Zwischenleitungen für die neue virtuelle Verbindung ausgewählt werden, deren zugeordnete Speicherplätze eine Koinzidenz hinsichtlich ihrer binären Kennzeichnung aufweisen.

2. Verfahren nach Anspruch 1,
dadurch gekennzeichnet,
daß als Bitraten-Grenzwerte für die einzelnen virtuellen Verbindungen Werte von mittleren Bitraten und/oder Werte von Spitzenbitraten festgelegt werden.

3. Verfahren nach Anspruch 2,
dadurch gekennzeichnet,
daß Verbindungs-Bitratenklassen bzw. Übertragungs-Bitratenklassen gebildet werden, die sich durch unterschiedliche mittlere Bitraten und/oder durch unterschiedliche Spitzenbitraten voneinander unterscheiden.

4. Verfahren nach Anspruch 2 oder 3,
dadurch gekennzeichnet,
daß ausgehend vom momentanen Belastungs-Ist-Zustand mit jedem Einrichten einer virtuellen Verbindung bzw. Aufheben einer eingerichteten virtuellen Verbindung auf den in Frage kommenden ATM-Zwischenleitungen jeweils die noch freie, für neue virtuelle Verbindungen verfügbare Übertragungskapazität dadurch für die einzelnen Übertragungs-Bitratenklassen aktualisiert wird, daß für jede der ATM-Zwischenleitungen nach Maßgabe der mittleren Bitraten und/oder der Spitzenbitraten sämtlicher über die jeweilige ATM-Zwischenleitung bereits eingerichteten virtuellen Verbindungen und nach Maßgabe der der jeweiligen Übertragungs-Bitratenklasse entsprechenden mittleren Bitrate und/oder Spitzenbitrate ein Übertragungsbitratenwert gebildet wird
und daß dann, wenn der ermittelte Übertragungsbitratenwert kleiner oder gleich einer für die jeweilige ATM-Zwischenleitung festgelegten maximalen Übertragungsbitrate ist, in den der jeweiligen Übertragungs-Bitratenklasse und den gegenüber dieser niedrigeren Übertragungs-Bitratenklassen zugeordneten Speicherelementen jeweils der die jeweilige ATM-Zwischenleitung betreffende Speicherplatz binär gekennzeichnet wird.

5. Verfahren nach Anspruch 4,
dadurch gekennzeichnet,
daß für die Ermittlung des Übertragungsbitratenwertes für die jeweilige ATM-Zwischenleitung mit jedem Einrichten bzw. Aufheben einer virtuellen Verbindung einerseits die Summe der mittleren Bitraten aller über diese eingerichteten virtuellen Verbindungen und andererseits eine Produktesumme aktualisiert wird, in welcher die einzelnen Produkte jeweils aus der mittleren Bitrate und der Differenz zwischen der Spitzenbitrate und der mittleren Bitrate einer der eingerichteten virtuellen Verbindungen gebildet sind, daß die betreffende Summe bzw. Produktesumme um die mittlere Bitrate bzw. um ein den in der Produktesumme enthaltenen Produkten entsprechendes Produkt einer einer der Übertragungs-Bitratenklassen entsprechenden virtuellen Verbindung erweitert wird und daß ein mit einem Vergrößerungs-Faktor multiplizierter Quadratwurzelwert der erweiterten Produktesumme zu der erweiterten Summe der mittleren Bitraten addiert wird.

## Claims

1. Method for setting up virtual connections in multistage ATM switching devices which operate using asynchronous transfer mode and comprise ATM switching matrices,
- in which ATM intermediate lines pass from switching stage to switching stage and con- nectATM switching elements of successive switching stages to one another,
- in which connection-specific bit-rate limit values (for example peak bit rates) are defined for the individual virtual connection by means of storage of corresponding data,
- in which routes are selected with the aid of at least one ATM intermediate line allocation memory in order to set up new virtual connections in a connection-specific manner, wherein the free bit rate transmission capacities which are still available are stored individually for the ATM intermediate lines,
- and in which the admissibility of setting up new virtual connections of one of the ATM intermediate lines which are possible for these connections is tested using the bit rate limit values which are defined for the new virtual connections and using the free bit rate transmission capacity which is still available in each case on the relevant ATM intermediate lines,
characterized
in that, on the one hand, the virtual connections are assigned to connection bit rate classes relating to magnitude ranges of the bit rate limit values and on the other hand the free transmission capacities which are still available in each case on the ATM intermediate lines are assigned to transmission bit rate classes having corresponding transmission bit rate limit values, in that the ATM intermediate lines which in each case originate from one of the ATM switching elements and/or lead to such an ATM switching element are combined to form an ATM intermediate line group, in that a family of memory elements, each having a plurality of memory locations, is reserved in the ATM intermediate line allocation memory or the ATM intermediate line allocation memories for each of the ATM intermediate line groups, each of the memory elements being assigned to a specific connection bit rate class or transmission bit rate class and, within the respective memory element, each of the memory locations being assigned to one of the ATM intermediate lines which are connected to the respective ATM switching element,
in that the individual memory locations of a memory element are in each case designated in binary form, if free transmission capacity is present on the associated ATM intermediate line for the transmission bit rate class assigned to the respective memory element,
in that a memory element corresponding to the connection bit rate class assigned to the new virtual connection is selected for setting up a new virtual connection via a numberof ATM intermediate lines, the number of which corresponds to the number of switching stages, for each of the possible ATM intermediate line groups,
and in that those ATM intermediate lines whose associated memory locations have a coincidence in terms of their binary designation are selected for the new virtual connection by means of a process of interrogation of the individual memory locations, which process of interrogation is defined in the same manner with respect to the sequence within the just selected memory elements.

2. Method according to Claim 1,
characterized
in that values of mean bit rates and/or values of peak bit rates are defined as bit rate limit values for the individual virtual connections.

3. Method according to Claim 2,
characterized
in that connection bit rate classes and transmission bit rate classes are formed which differ from one another by different mean bit rates and/or by different peak bit rates.

4. Method according to Claim 2 or 3,
characterized
in that that transmission capacity which is still free and is available for new virtual connections is updated for the individual transmission bit rate classes in each case on the basis of the instantaneous actual load state whenever a virtual connection is set up ora virtual connection which has been set up is cleared on the possible ATM intermediate lines, in that a transmission bit rate value is formed for each of the ATM intermediate lines on the basis of the mean bit rates and/or the peak bit rates of all the virtual connections which have already been set up over the respective ATM intermediate line and on the basis of the mean bit rate and/or peak bit rate corresponding to the respective transmission bit rate class,
and in that, if the determined transmission bit rate value is less than or equal to a maximum transmission bit rate which is defined for the respective ATM intermediate line, that memory location which relates to the respective ATM intermediate line is in each case designated in binary form in those memory elements which are assigned to the respective transmission bit rate class and the transmission bit rate classes which are lower than this transmission bit rate class.

5. Method according to Claim 4,
characterized
in that the sum of the mean bit rates of all the virtual connections set up via the respective ATM intermediate line, on the one hand, and a product sum, on the other hand, are updated for the determination of the transmission bit rate value for the respective ATM intermediate line whenever a virtual connection is set up or cleared, in which product sum the individual products are in each case formed from the mean bit rate and the difference between the peak bit rate and the mean bit rate of one of the virtual connections which has been set up, in that the relevant sum or product sum is extended by the mean bit rate or by a product, which corresponds to the products contained in the product sum, of a virtual connection which corresponds to one of the transmission bit rate classes
and in that a square-root value, which is multiplied by a gain factor, of the extended product sum is added to the extended sum of the mean bit rates.

## Revendications

1. Procédé d'établissement de liaisons virtuelles dans des dispositifs de commutation ATM fonctionnant suivant un mode de transfert asynchrone et comprenant des réseaux de connexion ATM à plusieurs étages,
- dans lesquels des lignes intermédiaires ATM mènent d'étages de connexion en étages de connexion et des organes de commutation ATM relient les uns aux autres des étages de connexion se suivant,
- dans lesquels des valeurs limites de débit binaire (par exemple des débits binaires de pointe) propres à chaque liaison virtuelle sont fixées par mémorisation de données correspondantes,
- dans lesquels on sélectionne, pour établir de nouvelles liaisons virtuelles, pour chaque liaison, des voies à l'aide d'au moins une mémoire d'occupation de lignes intermédiaires ATM, dans laquelle les capacités de transmission de débit binaire libres encore disponibles sont mémorisées individuellement pour les lignes intermédiaires ATM,
- et dans lesquels on vérifie l'admissibilité de l'établissement de nouvelles liaisons virtuelles concernant chacune des lignes intermédiaires ATM intervenant pour ces liaisons, en référence aux valeurs limites de débit binaire fixées pour les nouvelles liaisons virtuelles et en référence aux lignes intermédiaires ATM concernées,
caractérisé en ce que
on associe, d'une part, les liaisons virtuelles à des classes de débits binaires de liaison, qui se rapportent à des domaines de grandeur des valeurs limites de débits binaires, et on associe d'autre part les capacités de transmission libres encore disponibles sur les lignes intermédiaires ATM à des classes de débits binaires de transmission ayant des valeurs limites correspondantes de débits binaires de transmission,
on rassemble les lignes intermédiaires ATM sortant de l'un des organes de commutation ATM et/ou allant vers un organe de commutation de ce genre en un groupe de lignes intermédiaires ATM, on réserve dans la mémoire d'occupation de lignes intermédiaires ATM ou dans les mémoires d'occupation de lignes intermédiaires ATM, pour chacun des groupes de lignes intermédiaires ATM un ensemble d'éléments de mémoire ayant chacun une pluralité d'emplacements de mémoire, chacun des éléments de mémoire étant associé à une classe déterminée de débits binaires de liaison ou à une classe déterminée de débits binaires de transmission et, dans l'élément respectif de mémoire, chacun des emplacements de mémoire étant associé à l'une des lignes intermédiaires ATM connectée à l'organe de commutation ATM respectif,
on caractérise de manière binaire chaque emplacement de mémoire d'un élément de mémoire, en cas de présence d'une capacité libre de transmission sur la ligne intermédiaire ATM associée pour la classe de débits binaires de transmission, associée à l'élément de mémoire considéré,
on commande, afin d'établir une nouvelle liaison virtuelle par l'intermédiaire d'un nombre de lignes intermédiaires ATM, qui correspond au nombre d'étages de connexion, vers chacun des groupes des lignes intermédiaires ATM intervenant, un élément de mémoire correspondant à la classe de débits binaires de liaison associée à la nouvelle liaison virtuelle et on sélectionne, par une opération d'interrogation de chaque emplacement de mémoire, dont l'ordre est fixé de la même manière que dans les éléments de mémoire justement commandés, celles des lignes intermédiaires ATM pour la nouvelle liaison virtuelle, dont les emplacements de mémoire associés ont des caractérisations binaires coïncidant.

2. Procédé suivant la revendication 1, caractérisé en ce que l'on définit, comme valeur limite de débits binaires pour les liaisons virtuelles, des valeurs de débits binaires moyens et/ou des valeurs de débits binaires de pointe.

3. Procédé suivant la revendication 2, caractérisé en ce que l'on forme des classes de débit binaire de liaison ou classes de débit binaire de transmission, qui se distinguent les unes des autres par des débits binaires moyens différents et/ou par des débits binaires de pointe différents.

4. Procédé suivant la revendication 2 ou 3, caractérisé en ce que l'on actualise à partir de l'état réel instantané de charge, chaque fois que l'on établit une liaison virtuelle ou que l'on supprime une liaison virtuelle établie sur les lignes intermédiaires ATM intervenant, la capacité de transmission encore libre et disponible pour de nouvelles liaisons virtuelles, pour les classes de débits binaires de transmission, en formant pour chacune des lignes intermédiaires ATM une valeur de débit binaire de transmission, en fonction des débits binaires moyens et/ou des débits binaires de pointe de toutes les liaisons virtuelles, qui sont déjà établies par l'intermédiaire de la ligne intermédiaire ATM respective et en fonction des débits binaires moyens et/ou débits binaires de pointe correspondant à la classe respective de débits binaires de transmission
et on caractérise de manière binaire dans chacun des éléments de mémoire associé à la classe respective de débits binaires de transmission et aux classes des débits binaires de transmission plus basses par rapport à celle-ci,
l'emplacement de mémoire concernant la ligne intermédiaire respective ATM, lorsque la valeur déterminée de débit binaire de transmission est inférieure ou égale à un débit binaire maximum de transmission fixé pour la ligne intermédiaire ATM respective.

5. Procédé suivant la revendication 4, caractérisé en ce que afin de déterminer la valeur de débit binaire de transmission pour la ligne intermédiaire ATM respective, chaque fois que l'on établit ou supprime une liaison virtuelle, on actualise d'une part la somme des débits binaires moyens de toutes les liaisons virtuelles établies par l'intermédiaire de cette ligne et d'autre part une somme de produits, dans laquelle les produits du débit binaire moyen et de la différence entre le débit binaire de pointe et le débit binaire moyen d'une des liaisons virtuelles établies sont formés, on complète la somme ou somme de produits concernée, par le débit binaire moyen ou par un produit, qui correspond aux produits contenus dans la somme de produits, d'une liaison virtuelle correspondant à l'une des classes de débits binaires de transmission
et on additionne la racine carrée, multipliée par un facteur d'amplification, de la somme de produits complétée à la somme complétée des débits binaires moyens.
